# EUROPEAN PATENT APPLICATION

(11) **EP 3 540 278 A1**
(43) Date of publication of application: **18.09.2019**
(21) Application number: 19162657.1
(22) Date of filing: 13.03.2019
(51) Int. Cl.: F16K 11/087, F16K 5/06, F16K 5/12, E03C 1/04

(54) **GASKET FOR A BALL VALVE AND BALL SHUTTER ASSEMBLY COMPRISING THE GASKET**

(30) Priority: 13.03.2018 IT 201800003489
(71) Applicant: Effebi S.p.A., 25073 Bovezzo (IT)
(72) Inventor: TANGHETTI, Ermanno, 25062 CONCESIO (BS) (IT); BONOMI, Roberto, 25073 BOVEZZO (BS) (IT)
(74) Representative: Cernuzzi, Daniele

(57) **Abstract**

Gasket for a ball valve, comprising a support and sealing element (10a, 10b) having an annular sealing body (20), extending about an axis (A) and shaped so as to cooperate in use with a ball shutter (8) and having at least one sealing surface (23) designed to cooperate in a fluid-tight manner with a corresponding surface (17) of the shutter (8); and provided with a flowrate adjustment opening (28) defined by a contoured opening formed through a wall (27) of the support and sealing element (10a, 10b) and shaped so as to characterize the flowrate of a fluid flowing through the opening (28).

## Description

### CROSS-REFERENCE TO RELATED APPLICATIONS

This patent application claims priority from Italian patent application no. 102018000003489 filed on 13/03/2018.

### TECHNICAL FIELD

The present invention relates to a gasket for a ball valve and a ball shutter assembly comprising such a gasket.

### BACKGROUND ART

As already known, ball valves comprise a body having at least one inlet duct and at least one outlet duct for the passage of a fluid and a ball shutter arranged in a respective seat formed in the body between the inlet duct and the outlet duct and designed to rotate about an axis so as to intercept the fluid flow and adjust its flowrate. The shutter is mounted on a drive shaft, which can be operated e.g. by a lever. The sealing of the ball shutter on the valve body is guaranteed by a pair of lateral annular seals enclosing the shutter and whose section is designed so as to cooperate with the ball almost tangentially in order to minimize the contact (and therefore the friction) between the two components.

The ball valve is the most common and widespread type of device for intercepting a flow in hydraulic ducts. Its operation is based on the 90° rotation of a ball shutter provided with a cylindrical cavity that is coaxial to the flow. The valve allows the closing, the opening and the flow adjustment.

The ball is provided with a through opening, generally circular having an even section along the whole flow direction of the treated fluid.

This type of valve guarantees the passage of high flowrates with minimum load losses. Consequently, in this type of valves, the turbulence phenomena are reduced to a minimum. For these reasons, as well as for its relatively low cost, the ball valve is successfully used in many applications, although it normally does not allow a particularly precise adjustment.

A precise adjustment is required, for example, for fine-tuning the balancing of water and water-heating systems, with a remarkable consequent energy saving. These applications require control valves whose adjustment is determined by the variation of the flowrate based on the shutter movement.

Ball valves have the disadvantage of not allowing a flowrate proportional to the valve opening. The flowrate change occurring in the transition from the open position to the closed position and vice versa is not proportional in percentage to the amplitude of the rotation of the control member of the ball valve. As a result, ball valves are not recommended as adjustment valves.

To overcome this drawback, it is known the use of shutters (balls) provided with a suitably shaped hole for the fluid passage. Thanks to the particular shape of the ball, it is thus obtained a linearity between the movement of the shutter and the supplied flowrate, or it is known the association to the shutter provided with a cylindrical passage (i.e. a circular passage hole) of an adjustment disk, adjacent to the shutter and provided with a shaped passage hole to achieve a proportional flowrate supply. This special type of ball valves allows a particularly precise adjustment, which would be impossible with a traditional ball valve.

These solutions, although effective, entail additional manufacturing costs for the ball valve, requiring a shutter that is more complex to manufacture (namely provided with the shaped hole) or an additional component (the adjustment disk).

### DISCLOSURE OF INVENTION

It is an object of the present invention to overcome the aforesaid drawbacks of the known art. In particular, it is an object of the invention to provide a proportional, namely accurately adjustable, ball valve using components that are fully efficient, reliable and at the same time relatively simple and inexpensive to manufacture.

The present invention therefore relates to a gasket for a ball valve as defined in the appended claim 1, and to a ball shutter assembly as defined in the appended claim 13. Preferred additional characters of the invention are indicated in the dependent claims.

The use of the gasket of the invention allows an accurate proportional adjustment of the supplied flowrate to be obtained, in a particularly simple, inexpensive, fully effective and reliable way.

### BRIEF DESCRIPTION OF THE DRAWINGS

Further characteristics and advantages of the present invention will be clear from the following description of a non-limiting embodiment thereof with reference to the figures of the accompanying drawings, in which:
- Figure 1 is a schematic view in longitudinal section of a valve provided with a gasket and a ball shutter assembly according to the present invention;
- Figure 2 is an enlarged-scale view of a detail of Figure 1, in particular of the ball shutter assembly according to the invention;
- Figures 3 and 4 are two perspective views from opposite sides of the gasket according to the invention;
- Figures 5-7 show possible variations of the gasket of Figures 3-4.

### BEST MODE FOR CARRYING OUT THE INVENTION

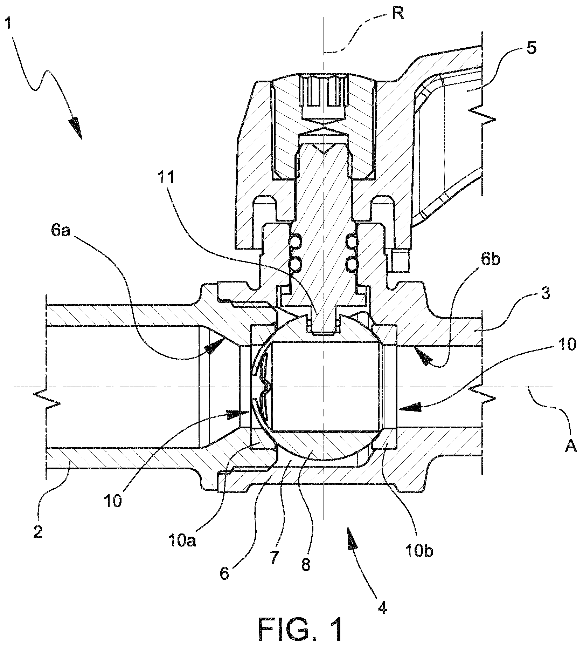

Figure 1 shows a ball valve indicated with the reference number 1.

In the non-limiting example shown, the valve 1 is a single-inlet valve, i.e. a valve having only one inlet connected to a single duct.

It is clear that the invention may be applied to other types of valves, even valves having multiple inlets and/or multiple outlets, even combined with each other and having various inclinations with respect to each other.

The valve 1 comprises an inlet duct 2, which can be connected in use to a supply duct (not shown) carrying a fluid flow (of any kind) to the valve 1, an outlet duct 3 letting out the fluid that has been flowing through the valve 1, a ball shutter assembly 4 inserted between the inlet duct 2 and the outlet duct 3 and a control member 5 connected to the shutter assembly 4 for operating the shutter assembly 4 and opening/closing the valve 1.

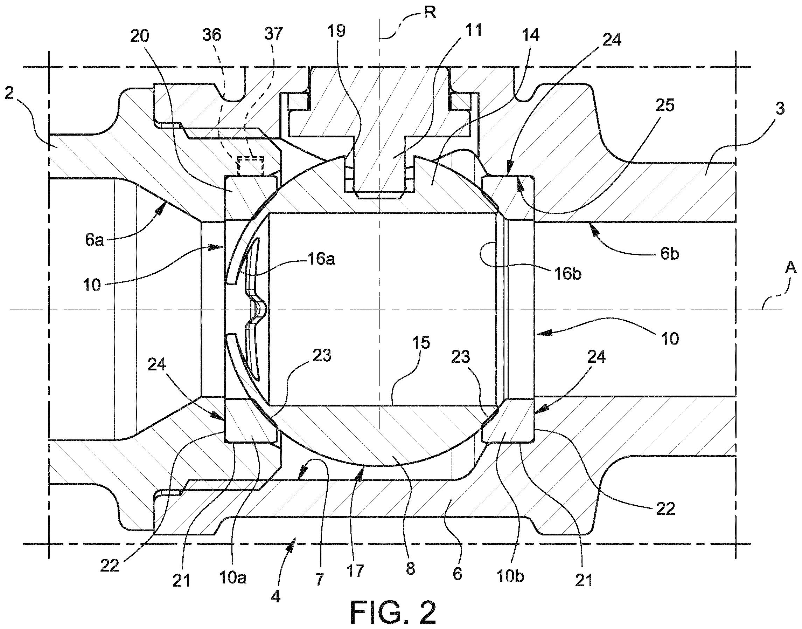

With reference also to the enlarged Figure 2, the shutter assembly 4 extends along an axis A and comprises a valve body 6 having an inlet 6a and an outlet 6b respectively connected to the inlet duct 2 and to the outlet duct 3; a chamber 7 arranged between the inlet 6a and the outlet 6b; a ball shutter 8 housed in the chamber 7; a pair of gaskets 10 cooperating with the shutter 8 and an actuator 11 connected to the shutter 8.

The shutter 8 has a body 14 having a substantially spherical shape and is provided with an inner diametrical through channel 15 having respective opposite end openings 16a, 16b substantially aligned along the axis A (further defining a diametrical axis of the body 14) and formed on an outer surface 17 of the shutter 8. It is clear that the openings 16a, 16b can also be differently arranged on the shutter 8, being e.g. orthogonal or with a given angle with respect to each other.

The shutter 8 is coupled to the actuator 11, for example by means of a groove 19 formed on the outer surface 17 of the body 14 and engaged by a portion of the actuator 11 so that a rotation of the actuator 11 causes a corresponding rotation of the shutter 8, in particular about a rotation axis R orthogonal to the axis A. It is clear that the shutter 8 can be also differently actuated/operated.

The shutter 8 is movable between an open position (shown in Figures 1 and 2), in which the channel 15 and in particular its openings 16a, 16b are substantially aligned (or at least communicating) with the inlet duct 2 and the outlet duct 3 to allow the passage of water from the inlet duct 2 to the outlet duct 3; and a closed position (not shown), in which the shutter 8 is arranged so that the channel 15 is not in communication with the inlet duct 2, thus preventing the flow of water coming from the inlet duct 2 from being supplied to the outlet duct 3.

The actuator 11 is connected to the control member 5, in a known manner and not described in detail, so that in use the rotation of the control member 5 causes a rotation of the actuator 11 and a consequent rotation of the shutter 8. The gaskets 10 comprise respective support and sealing elements 10a, 10b, arranged on opposite sides of the shutter 8 along the axis A and shaped to support the shutter 8 and cooperate in a fluid-tight manner with it.

In the shown example, each element 10a, 10b is substantially ring-shaped about the axis A and comprises an annular sealing body 20 having a radially external peripheral edge, for example, substantially circular. It is clear that the elements 10a, 10b may have different shapes, even with a non-circular contour, and may be formed by several components, even made of different materials, having for example a main annular body made of substantially rigid polymeric material (PTFE, for example) and an elastomeric sealing ring of the O-ring type.

The elements 10a, 10b are arranged on opposite sides of the shutter 8 along the axis A and are inserted into respective housings 21 formed in the valve body 6, in particular in the chamber 7, and having respective opposite axial shoulders 22 transversal (in particular, perpendicular) to the axis A, against which the respective elements 10a, 10b abut.

Each element 10a, 10b is therefore arranged between the shutter 8 and the respective shoulder 22.

The elements 10a, 10b are coupled in a fluid-tight manner with the shutter 8 and with the respective housings 21, which they contact by means of respective sealing surfaces 23, 24 formed in particular on the annular body 20.

In particular, the elements 10a, 10b are provided with respective first sealing surfaces 23, facing towards the shutter 8 and contacting the surface 17 of the shutter 8, and are substantially shaped like a spherical portion to cooperate in a fluid-tight manner with the surface 17, thus allowing at the same time the rotation of the shutter 8 with respect to the elements 10a, 10b.

The elements 10a, 10b are further provided with respective second sealing surfaces 24, which contact respective shoulders 22 (thus forming an axial seal) and/or respective annular surfaces 25 of the housings 21 (thus forming a radial seal).

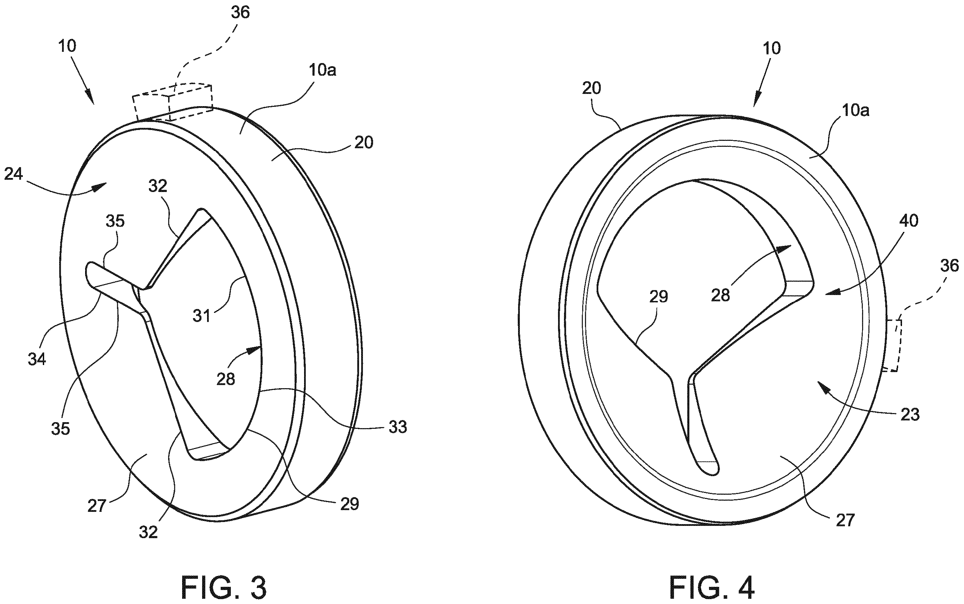

According to the invention, as shown in Figures 3 and 4, at least one of the elements 10a, 10b (e.g. in Figures 3, 4 the element 10a) is provided with a wall 27, which is transversal (substantially perpendicular) to the axis A and extends from the annular body 20 towards the axis A.

The wall 27 has a contoured through opening 28 along the axis A, eccentric and/or asymmetric with respect to the axis A.

The opening 28 is delimited by a peripheral edge 29 and has such a shape to characterize the flowrate through the opening 28 so as to allow the adjustment in percentage of the flowrate in proportion to the angle of rotation of the shutter 8.

The opening 28 therefore defines an opening for the flowrate adjustment and may have different shapes.

For example, the opening 28 is substantially saddle-shaped, lobe-shaped or polygonal (e.g. triangular) with rounded sides and/or vertices, etc.

In the definitely non-limiting example shown in Figures 3-4, the opening 28 comprises a circular sector portion 31 having two converging sides 32 and a curved edge 33 joining them; and optionally a longitudinal portion 34, which extends from a vertex of the portion 31 along a diametrical axis of the wall 27 and has substantially parallel sides 35.

The element 10a is optionally provided with an angular positioning member 36, only schematically shown in broken lines in the figures, which engages an abutment seat 37 formed in the respective housing 21 for correctly positioning the element 10a and then orienting the opening 28 as well as angularly locking the element 10a in the housing 21, thus preventing the rotation of the element 10a about the axis A.

The openings 16a, 16b of the shutter 8 may be circular (and therefore without any flowrate adjustment function); or also one of the openings 16a, 16b of the shutter 8 may be a shaped opening.

In the embodiment shown (not necessarily), the opening 16a facing the element 10a provided with the contoured opening 28 is in turn shaped to adjust the fluid flowrate flowing through the shutter 8. The opposite opening 16b is instead circular, for example.

In this way, the characteristic flowrate supplied by the valve 1 by varying the opening of the shutter assembly 4 depends on the combined effect of the opening 28 of the element 10a and of the opening 16a of the shutter 8.

Other embodiments not shown, besides the opening 28 formed on the element 10a (or on the other element 10b), may use an adjustment disk of the known type provided with another shaped opening and adjacent to the element 10a with the opening 28.

If the valve 1 is a valve with more than two ways, the support and seal element 10a, 10b provided with the shaped opening 16a, 16b might be arranged on any of the inlets or outlets of the valve 1. Clearly, more elements 10a, 10b provided with a shaped opening can be used, even having different shapes and even combined with other components of the shutter assembly 4 provided with another shaped opening (shutter and/or adjustment disk).

The opening 28 can be formed on a portion of the surface 40 of the wall 27 that contacts the shutter 8 in use, in particular on a portion of the sealing surface 23, as shown in the example of Figure 4.

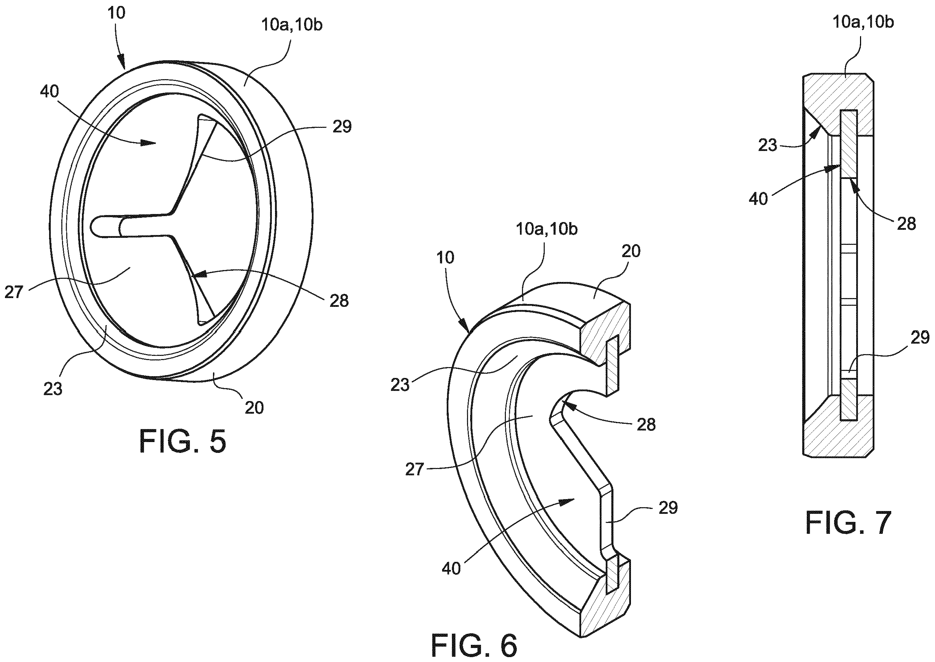

Alternatively, as shown in Figures 5-7, the opening 28 is formed on a surface portion 40 that does not contact the shutter 8.

In particular, the surface portion 40 provided with the opening 28 has a different curvature if compared with the sealing surface 23, so that in use, when the sealing surface 23 contacts the shutter 8, the surface portion 40 is spaced apart from the shutter 8.

In the example of Figures 5-7, the wall 27 in which the opening 28 is formed extends radially inside from the sealing surface 23 and the surface portion 40 is connected to the sealing surface 23 by means of a peripheral edge 42, for example circular, defining an annular step 43 about the opening 28.

In this way, during the rotation of the shutter 8 with respect to the element 10a, 10b provided with the opening 28, the shutter 8 does not contact the surface portion 40 provided with the opening 28, thus ensuring a long life to the elements 10a, 10b.

The elements 10a, 10b (in particular the one provided with the wall 27 and the opening 28) can be made of various materials, both single-component and multi-component.

For example, in the embodiment of Figures 6-7, the element 10a, 10b is formed by two pieces assembled or otherwise joined together: the annular seal body 20, provided with the sealing surfaces 23, 24 (and therefore performing the sealing function) and the wall 27, having the flowrate adjustment opening 28 (and therefore performing the function of characterizing the flowrate).

The two pieces (annular body 20 and wall 27) may also be made of different materials.

In general, each of the support and sealing elements 10a, 10b may be made of a single-component monolithic piece (made entirely of a single material), of a multi-component monolithic piece (having parts made of different materials, e.g. the annular body 20 and the wall 27), of several pieces (e.g. the annular body 20 and the wall 27) assembled and/or joined together, made of same or different materials.

It is finally clear that further modifications and variations may be made to the gasket and to the shutter assembly described and illustrated herein without departing from the scope of the appended claims.

## Claims

1. A gasket (10) for a ball valve, comprising a support and sealing element (10a, 10b) having an annular sealing body (20), extending about an axis (A) and shaped so as to cooperate in use with a ball shutter (8) and having at least one sealing surface (23) configured to cooperate in a fluid-tight manner with a respective surface (17) of the shutter (8); **characterized by** being provided with a flowrate adjustment opening (28), defined by a contoured opening formed through a wall (27) of the support and sealing element (10a, 10b) and shaped so as to characterize the flowrate of a fluid flowing through the opening (28).

2. A gasket according to claim 1, wherein the support and sealing element (10a, 10b) is provided with an angular positioning member (36) shaped to engage an abutment seat (37) formed in a valve body (6) for orienting the opening (28) and preventing the rotation of the support and sealing element (10a, 10b) about the axis (A).

3. A gasket according to claim 1 or 2, wherein the support and sealing element (10a, 10b) is defined by a monolithic single-component piece.

4. A gasket according to claim 1 or 2, wherein the support and sealing element (10a, 10b) is defined by a monolithic multi-component piece.

5. A gasket according to claim 1 or 2, wherein the support and sealing element (10a, 10b) consists of a number of pieces assembled or joined to one another, made of same or different materials.

6. A gasket according to claim 1 or 2, wherein the annular sealing body (20), which performs in use the sealing function, and the wall (27) provided with the opening (28), which performs in use the function of characterizing the flowrate, are respective pieces of the support and sealing element (10a, 10b), the wall (27) being enclosed in the annular sealing body (20).

7. A gasket according to any one of the preceding claims, wherein the opening (28) is formed on a surface portion (40) of the support and sealing element (10a, 10b) whose curvature differs from the one of the sealing surface (23), so that in use, when the sealing surface (23) contacts the shutter (8), the surface portion (40) is spaced apart from the shutter (8).

8. A gasket according to claim 7, wherein the wall (27) having the opening (28) projects radially inwards from the sealing surface (23) and the surface portion (40) is joined to the sealing surface (23) by a peripheral edge (42), for example circular, defining an annular step (43) about the opening (28).

9. A gasket according to any one of the preceding claims, wherein the opening (28) is eccentric and/or asymmetrical with respect to the axis (A).

10. A gasket according to any one of the preceding claims, wherein the support and sealing element (10a, 10b) is substantially ring-shaped about the axis (A) and has a radially outer peripheral edge (20), for example substantially circular, and a wall (27) transverse to the axis (A), which extends from the peripheral edge (20) towards the axis (A) and is provided with the opening (28).

11. A gasket according to any one of the preceding claims, wherein the opening (28) is substantially saddle-shaped, lobe-shaped or polygonal with rounded sides and/or vertices.

12. A gasket according to any one of the preceding claims, wherein the opening (28) comprises a circular sector portion (31) having two converging sides (32) and a curved edge (33) joining the sides; and a longitudinal portion (34), extending along a diametric axis and having substantially parallel sides (35).

13. Ball shutter assembly (4) extending along an axis (A) and comprising a valve body (6) having an inlet (6a) and an outlet (6b) and a chamber (7) arranged between the inlet and the outlet; a ball shutter (8) housed in the chamber (7); a pair of gaskets (10) arranged on opposite sides of the shutter (8) along the axis (A) and coupled in a fluid-tight manner with the shutter (8); and an actuator (11) connected to the shutter (8); **characterized in that** at least one of the gaskets (10) is a gasket according to any one of the preceding claims.

14. A shutter assembly according to claim 13, wherein the shutter (8) is provided with a second flowrate adjustment opening (16a, 16b) facing the first flowrate adjustment opening (28) and defined by another contoured opening shaped so as to characterize the flowrate provided by the shutter assembly (4).
